**Europäisches Patentamt**

**European Patent Office**

**Office européen des brevets**

(19)

(11) Veröffentlichungsnummer: **0 140 045**
**B1**

(12) **EUROPÄISCHE PATENTSCHRIFT**

(45) Veröffentlichungstag der Patentschrift: **12.12.90**

(21) Anmeldenummer: **84110536.4**

(22) Anmeldetag: **05.09.84**

(51) Int. Cl.⁵: **B 01 D 53/36, B 01 J 32/00**

(54) Verfahren zur Entschwefelung von H 2 S-haltigen Gasen.

(30) Priorität: **09.09.83 DE 3332563**

(43) Veröffentlichungstag der Anmeldung:
**08.05.85 Patentblatt 85/19**

(45) Bekanntmachung des Hinweises auf die
Patenterteilung:
**12.12.90 Patentblatt 90/50**

(84) Benannte Vertragsstaaten:
**AT BE DE FR GB IT NL SE**

(56) Entgegenhaltungen:
**EP-A-0 060 742**
**EP-A-0 091 551**
**US-A-3 393 050**

(73) Patentinhaber: **BASF Aktiengesellschaft**
**Carl-Bosch-Strasse 38**
**D-6700 Ludwigshafen (DE)**

(72) Erfinder: **Broecker, Franz Josef, Dr.**
**Schwanthaler Allee 20**
**D-6700 Ludwigshafen (DE)**
Erfinder: **Gettert, Hans, Dr.**
**Muldweg 2**
**D-6945 Gross-Sachsen (DE)**
Erfinder: **Kaempfer, Knut, Dr.**
**Petersstrasse 1**
**D-6700 Ludwigshafen (DE)**

EP 0 140 045 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein Verfahren zur Entschwefelung von $H_2S$-haltigen Gasen durch direkte katalytische Oxidation des $H_2S$ zu elementarem Schwefel mit Sauerstoff enthaltenden Gasen.

Aus der russischen Patentschrift 856 974 ist bereits ein Verfahren zur Entschwefelung von $H_2S$-haltigen Gasen durch direkte katalytische Oxidation von $H_2S$ zu elementarem Schwefel mit Sauerstoff enthaltenden Gasen bekannt, bei dem Eisenoxid enthaltendes Titandioxid als Katalysator verwendet wird. Dieses Verfahren ist jedoch nicht befriedigend, insbesondere bei der Entschwefelung von Gasen mit relativ geringen $H_2S$-Gehalten, z.B. von höchstens 30% $H_2S$.

Es bestand daher Bedarf nach einem Verfahren zur Entschwefelung von $H_2S$-haltigen Gasen, bei dem die Nachteile der bekannten Verfahren vermieden werden können.

Es wurde nun ein vorteilhaftes Verfahren gefunden zur Entschwefelung von $H_2S$-haltigen Gasen durch direkte katalytische Oxidation des $H_2S$ zu elementarem Schwefel mit Sauerstoff enthaltenden Gasen bei erhöhter Temperatur, welches dadurch gekennzeichnet ist, daß als Katalysator ein Titandioxid-Trägerkatalysator mit einem Gehalt von 0,1 bis 25 Gew.% Nickeloxid und 0 bis 10 Gew.% Aluminiumoxid, bezogen auf den Trägerkatalysator, verwendet wird.

Das neue Verfahren zeichnet sich durch hohe Ausbeuten und Selektivität aus und ist besonders für die Entschwefelung von Gasen mit relativ geringen $H_2S$-Gehalten, beispielsweise mit $H_2S$-Gehalten von höchstens 30 Vol.%, vorzugsweise höchstens 25 Vol.%, insbesondere höchstens 20 Vol.% geeignet. Mit besonderem Vorteil wird es für Gase mit $H_2S$-Gehalten im Bereich von 3 bis 30 Vol.%, vorzugsweise 4 bis 25 Vol.%, insbesondere 5 bis 20 Vol.% angewendet. Das neue Verfahren weist somit erhebliche Vorteile gegenüber den herkömmlichen Claus-Verfahren auf, bei denen in der Regel die $H_2S$-haltigen Gase einen $H_2S$-Gehalt von mindestens 50 Vol.% aufweisen müssen, um die $H_2S$-haltigen Gase in einfacher Weise mit Luft umsetzen zu können (vgl. Chemie-Ing.-Techn., 39. Jahrgang, 1967, Seiten 515 bis 520). Dagegen können nach dem erfindungsgemäßen Verfahren $H_2S$-haltige Gase mit kleinen $H_2S$-Gehalten umgesetzt werden, ohne daß vorher eine Anreicherung auf $H_2S$-Gehalte von mindestens 50 Vol.% erforderlich ist. Ein weiterer Vorteil des erfindungsgemäßen Verfahrens besteht darin, daß es für die direkte katalytische Oxidation des Schwefelwasserstoffs in einem einfachen Röhrenreaktor besonders geeignet ist. Es war überraschend, daß nach dem erfindungsgemäßen Verfahren in einem einfachen Röhrenreaktor Schwefelausbeuten von mehr als 90% erzielt werden können, da in der US-Patentschrift 3 393 050 (vgl. auch russische Patentschrift 856 974) beschrieben wird, daß zur Erzielung einer hohen Schwefelausbeute zwischen dem Katalysatorkorb und der Rohrwand ein Katalysator-freier Zwischenraum eingehalten werden muß und die Reaktionswärme und der gebildete elementare Schwefel in flüssiger Form gleichzeitig im Röhrenreaktor abgeführt werden müssen.

Nach dem erfindungsgemäßen Verfahren wird als Katalysator ein Titandioxid-Trägerkatalysator mit einem Gehalt von 0,1 bis 25 Gew.%, vorzugsweise 0,5 bis 20 Gew.-%, insbesondere 1 bis 12 Gew.% Nickeloxid und 0 bis 10 Gew.%, vorzugsweise 0,1 bis 10 Gew.%, insbesondere 0,3 bis 5 Gew.% Aluminiumoxid, bezogen auf den Trägerkatalysator, verwendet. Bevorzugte Katalysatoren setzen sich daher zusammen aus 0,1 bis 25 Gew.%, vorzugsweise 0,5 bis 20 Gew.%, insbesondere 1 bis 12 Gew.% Nickeloxid, 0 bis 10 Gew.%, vorzugsweise 0,1 bis 10 Gew.%, insbesondere 0,3 bis 5 Gew.% Aluminiumoxid und der Rest Titandioxid, d.h. 65 bis 99,9 Gew.%, vorzugsweise 70 bis 99,4 Gew.%, insbesondere 83 bis 98,7 Gew.% Titandioxid. Vorteilhaft wird als Titandioxid-Trägermaterial Anatas mit einer BET-Oberfläche von mindestens 50 $m^2/g$, vorzugsweise 100 bis 300 $m^2/g$, insbesondere 120 bis 300 $m^2/g$ verwendet.

Mit besonderem Vorteil wird ein die calcinierte Verbindung von $Ni_6Al_2(OH)_{16}CO_3.4H_2O$ enthaltender Katalysator verwendet. Die Calcinierung dieser Verbindung erfolgt im allgemeinen bei Temperaturen zwischen 150 und 600°C, vorzugsweise zwischen 250 und 500°C, insbesondere zwischen 300 und 400°C.

In einer vorteilhaften Ausführungsform des erfindungsgemäßen Verfahrens erfolgt die direkte katalytische Oxidation des $H_2S$ zu elementarem Schwefel mit Sauerstoff enthaltenden Gasen in einem Röhrenreaktor unter indirektor Abführung der Reaktionswärme mit einem Kühlmittel, wobei sich der Katalysator in den Rohren des Röhrenreaktors befindet und die Rohre des Röhrenreaktors über den ganzen Querschnitt der Rohre ausfüllt. Zweckmäßig wird die direkte katalytische Oxidation in isothermer Fahrweise durchgeführt. Im allgemeinen wird die katalytische Oxidation in der Weise durchgeführt, daß die Austrittstemperatur des Reaktionsgases aus dem Röhrenreaktor 180 bis 400°C, vorzugsweise 200 bis 350°C, insbesondere 220 bis 320°C beträgt.

Im allgemeinen wird die katalytische Oxidation bei Normaldruck oder bei leichtem Überdruck durchgeführt. Es kann jedoch auch Unterdruck angewendet werden. Im allgemeinen werden Drucke von 0,5 bis 10 bar, vorzugsweise 0,6 bis 5 bar, insbesondere 0,8 bis 2 bar angewendet.

Als Kühlmittel kommen für die katalytische Oxidation im Röhrenreaktor z.B. Wasser oder organische Wärmeträgeröle wie Diphenyl oder Diphenyloxid in Betracht. Vorzugsweise wird als organisches Wärmeträgeröl eine Mischung aus Diphenyl und Diphenyloxid zweckmäßig im Gewichtsverhältnis 1:20 bis 10:1, vorzugsweise 1:10 bis 5:1 verwendet. Mit besonderem Vorteil wird das azeotrope Gemisch aus 27% Diphenyl und 73% Diphenyloxid verwendet. Bei verwendung eines organischen Wärmeträgeröls als Kühlmittel wird die Reaktionswärme zweckmäßig durch Siedekühlung abgeführt.

Der Röhrenreaktor kann aus einem Rohr, das vom Mantelraum umgeben ist, bestehen. Im allgemeinen wird der Röhrenreaktor jedoch mehrere bzw. eine Vielzahl von Rohren enthalten, die vom Mantelraum umgeben sind.

Die erfindungsgemäß zu entschwefelnden $H_2S$-haltigen Gase werden beispielsweise als Sauergase aus partiellen Oxidationsanlagen, Kohlevergasungsanlagen, Erdgaswaschanlagen oder in Raffinerien erhalten. Das Verfahren eignet sich auch zur unmittelbaren Entschwefelung von $H_2S$-haltigen Erdgasen.

Für die katalytische Oxidation kommen als Sauerstoff enthaltende Gase beispielsweise Sauerstoff selbst, durch Sauerstoffzusatz im Sauerstoffgehalt angereicherte Luft oder Luft in Betracht.

Aus dem aus dem Röhrenreaktor erhaltenen Reaktionsgemisch wird der im Röhrenreaktor gebildete Schwefel zweckmäßig in einer dem Röhrenreaktor nachgeschalteten Kondensationsstufe abgetrennt. Dies erfolgt zweckmäßig durch Kondensieren des Schwefels, z.B. in einem Wärmetauscher, und Abscheiden des kondensierten Schwefels in einem Abscheider, z.B. in einem Zyklonabscheider.

Bei der direkten katalytischen Oxidation werden, bezogen auf den im eingesetzten $H_2S$-haltigen Gas enthaltenen Schwefelwasserstoff, Schwefelausbeuten von mehr als 90%, z.B. 93%, erhalten.

Zweckmäßig wird das nach der katalytischen Oxidation und der Abscheidung des gebildeten Schwfels erhaltene Reaktionsgemisch anschließend zur Entfernung der noch im Reaktionsgas enthaltenden Schwefelverbindungen in einem adiabatisch betriebenen Reaktor an einem Titandioxid enthaltenden Katalysator umgesetzt, wobei für das den adiabatischen Reaktor verlassende gasförmige Reaktionsgemisch im allgemeinen Austrittstemperaturen von 150 bis 350°C, vorzugsweise 150 bis 300°C, insbesondere 160 bis 250°C, aufrechterhalten werden. Vorzugsweise wird Titandioxid als solches eingesetzt, beispielsweise ein Titandioxid von üblicher technischer Reinheit. Mit besonderem Vorteil wird als Titandioxid Anatas mit einer BET-Oberfläche von mindestens 50 m²/g, vorzugsweise 100 bis 300 m²/g, insbesondere 120 bis 300 m²/g verwendet.

Aus dem aus dem adiabatischen Reaktor erhaltenen Reaktionsgemisch wird der im adiabatischen Reaktor gebildete Schwefel zweckmäßig in einer dem adiabatischen Reaktor nachgeschalteten Kondensationsstufe abgetrennt. Dies erfolgt zweckmäßig durch Kondensieren des Schwefels, z.B. in einem Wärmetaucher, und Abscheiden des kondensierten Schwefels in einem Abscheider, z.B. in einem Zyklonabscheider.

Während in der ersten Stufe der katalytischen Oxidation im Röhrenreaktor im allgemeinen $H_2S$-Umsätze zu elementarem Schwefel von z.B. 92 bis 95% erhalten werden, kann durch Kombination mit der zweiten Stufe im adiabatischen Reaktor der gesamte Umsatz zu elementarem Schwefel bis auf ca. 98% erhöht werden.

Im allgemeinen wird man das nach der katalytischen Oxidation und der Abscheidung des gebildeten Schwefels erhaltene Reaktionsgas anschließend zur Entfernung von noch im Reaktionsgas enthaltenem $H_2S$ und anderen Schwefelverbindungen und enthaltenem elementarem Schwefel weiteren Reinigungsoperationen unterwerfen.

Ein bevorzugtes Verfahren zur Entfernung der noch im Reaktionsgas enthaltenen Schwefelverbindungen und des elementaren Schwefels besteht darin, daß man das aus der dem adiabatischen Reaktor nachgeschalteten Kondensationsstufe erhaltene Gas nach Zugabe von Wasserstoff bei erhöhter Temperatur an einem Nickel und/oder Kobalt und Molybdän enthaltenden Katalysator zur Überführung von noch in dem Gas enthaltenen Schwefelverbindungen und enthaltenem elementarem Schwefel in Schwefelwasserstoff katalytisch hydriert und den gebildeten Schwefelwasserstoff aus dem aus der Hydrierung erhaltenen Gasstrom durch Behandlung mit einem Lösungsmittel auswäscht, den Schwefelwasserstoff durch Regenerierung des beladenen Lösungsmittels abtrennt und zweckmäßig zur katalytischen Oxidation im Röhrenreaktor zurückführt. Vorzugsweise werden für die katalytische Hydrierung Nickel und Molybdän oder Kobalt, Nickel und Molybdän oder vorzugsweise Kobalt und Molybdän enthaltende Katalysatoren verwendet, wobei die Metalle im allgemeinen in Form ihrer Verbindungen, vorzugsweise als Oxide und/oder Sulfide, eingesetzt werden. Im allgemeinen beträgt das Gewichtsverhältnis von Nickel zu Molybdän oder Kobalt zu Molybdän oder Nickel und Kobalt zu Molybdän (berechnet als deren Oxide, Nickel als NiO, Kobalt als CoO, Molybdän als $MoO_3$) 1:50 bis 50:1, vorzugsweise 1:30 bis 10:1, insbesondere 1:10 bis 3:1. Vorzugsweise werden diese Nickel und/oder Kobalt und Molybdän bzw. deren Verbindungen enthaltenden Katalysatoren als Trägerkatalysatoren verwendet, wobei Aluminiumoxid als Trägermaterial bevorzugt ist. Im allgemeinen wird die Hydrierung bei Temperaturen von 200 bis 450°C, vorzugsweise 250 bis 400°C, insbesondere 280 bis 370°C durchgeführt. Aus dem aus der Hydrierung erhaltenen $H_2S$-haltigen Gas wird das $H_2S$ zweckmäßig durch eine Gaswäsche mit einem selektiven Lösungsmittel ausgewaschen. Das dabei erhaltene, das ausgewaschene $H_2S$ enthaltende Sauergas wird zweckmäßig zur katalytischen Oxidation zurückgeführt. Geeignete selektive Lösungsmittel für die Gaswäsche sind z.B. eine wäßrige Lösung des Kaliumsalzes der N,N-Dimethylaminoessigsäure (®ALKAZID-Lauge), Dialkylether von Polyethylenglykolen, z.B. der Methylisopropylether von Polyethylenglykolen (®SEPASOLV MPE), Triethanolamin, Methyldiethanolamin.

Ein weiteres bevorzugtes Verfahren zur Entfernung der noch im Reaktionsgas enthaltenen Schwefelverbindungen und des enthaltenen elementaren Schwefels besteht darin, daß man das aus der dem adiabatischen Reaktor nachgeschalteten Kondensationsstufe erhaltene Gas zunächst, wie im vorstehenden Absatz beschrie-

ben, zur Überführung von noch in dem Gas enthaltenen Schwefelverbindungen und enthaltenem elementarem Schwefel in Schwefelwasserstoff katalytisch hydriert. Zur Abtrennung des in dem aus der Hydrierung erhaltenen Gas enthaltenen Schwefelwasserstoffs wird das aus der Hydrierung erhaltene Gas mit einem Sauerstoff enthaltenden Gas und Ammoniak versetzt und danach über Aktivkohle geleitet, wobei der Schwefelwasserstoff zu elementarem Schwefel oxidiert wird, der von der Aktivkohle absorbiert wird. Als Sauerstoff enthaltende Gase kommen beispielsweise Sauerstoff selbst, durch Sauerstoffzusatz im Sauerstoffgehalt angereicherte Luft und vorzugsweise Luft in Betracht. Zusätzlich zum Sauerstoff enthaltenden Gas wird das aus der Hydrierung erhaltene Gas mit zweckmäßigerweise gasförmigem Ammoniak versetzt, das im allgemeinen in Mengen von 1 bis 20.000 mg, vorzugsweise 5 bis 2000 mg, insbesondere 10 bis 1000 mg, je $N/m^3$ Gas zugegeben wird. Das nach der Zugabe des Sauerstoff enthaltenden Gases und des Ammoniaks erhaltene Gasgemisch wird im allgemeinen bei Temperaturen von 5 bis 150°C, vorzugsweise 20 bis 120°C, insbesondere 30 bis 80°C über die Aktivkohle geleitet. Zweckmäßig werden dabei Raumgeschwindigkeiten von 10 bis 10.000 $Nm^3$, vorzugsweise 100 bis 2000 $Nm^3$, insbesondere 200 bis 1000 $Nm^3$ Gasgemisch mit je $m^3$ Aktivkohlebett und Stunde angewendet. Der Schwefelwasserstoff wird dabei selektiv zu elementarem Schwefel oxidiert, der auf der Aktivkohle absorbiert wird.

Mit dieser Arbeitsweise ist es möglich, den $H_2S$-Gehalt in dem aus dem Aktivkohlebett erhaltenen Gas auf weniger als 1 $mg/Nm^3$ zu senken.

Das mit Schwefel beladene Aktivkohlebett wird zweckmäßig unter Gewinnung des Schwefels regeneriert. Dies geschieht beispielsweise, indem durch Überleiten von heißen Gasen, z.B. Kohlendioxid oder Stickstoff, über das mit Schwefel beladene Aktivkohlebett der Schwefel ausgetragen und anschließend aus dem heißen Gas, z.B. durch Kondensation, abgetrennt wird. Im allgemeinen betragen die Temperaturen des über das Aktivkohlebett geleiteten Gases 100 bis 700°C, vorzugsweise 150 bis 600°C, insbesondere 200 bis 550°C. Weiter kann das Aktivkohlebett in der Weise regeneriert werden, daß der beladene Schwefel durch Extraktion mit Polyammoniumsulfid-Lauge ausgewaschen wird.

Die folgenden Beispiele veranschaulichen die Erfindung.

Biespiel 1

Herstellung des NiO und $Al_2O_3$ enthaltenden Titandioxid-Trägerkatalysators

(a) Das Titandioxid wurde in der Weise erhalten, daß man das beim Schwefelsäureaufschluß von Ilmenit ($FeTiO_3$) anfallende Titanoxidhydrat bei Temperaturen zwischen 100 und 150°C trocknete. Das bei der Trocknung erhaltene Titandioxid mit einem Glühverlust (2 h bei 900°C) von 20,6 Gew.% und einer BET-Oberfläche von 210 $m^2/g$ wurde als Katalysatorausgangsprodukt eingesetzt.

(b) Das calcinierte Produkt von Nickel-aluminium-hydroxidcarbonat der Formel $Ni_6Al_2(OH)_{16}CO_3.4H_2O$ wurde wie folgt hergestellt:

640 l einer wäßrigen Lösung von 279,4 kg $Ni(NO_3)_2.6H_2O$ und 120,04 kg $Al(NO_3)_3.9H_2O$ (Lösung 1) sowie 750 l einer wäßrigen Lösung von 159 kg technische Soda (Lösung 2) wurden getrennt ebenso wie eine Wasservorlage in einem Rührkessel auf 80° aufgeheizt. Durch parallelen Zulauf der Lösungen 1 und 2 zur Wasservorlage wurde die Fällung bei einer Temperatur von 80°C durchgeführt. Nach beendeter Fällung wurde noch 15 Minuten bei 80°C nachgerührt. Anschließend wurde der Niederschlag abfiltriert und gewaschen. Das gewaschene Produkt wurde bei 110°C getrocknet und anschließend bei 350°C calciniert. Man erhielt 100 kg oxidische Röstmasse aus NiO und $Al_2O_3$ mit einem Glühverlust von 10,1 Gew.%.

(c) Aus den gemäß (a) und (b) erhaltenen Produkten wurde der Katalysator wie folgt hergestellt:

51 kg Titandioxid und 4 kg der oxidischen Röstmasse wurden in einem Kneter 5 Minuten trocken gemischt. Anschließend wurde eine Mischung aus 2 l konzentrierter $HNO_3$ und 20,08 l Wasser zugegeben und 2 Stunden geknetet. Die entstandene Paste wurde zu 4 mm Strängen verpreßt, bei 110°C getrocknet und danach 6 Stunden bei 350°C calciniert. Man erhielt 46,5 kg 4 mm Stränge mit einem Glühverlust (2 h bei 900°C) von 7,75 Gew.%. Die Zusammensetzung der Stränge betrug:

84,75 Gew.% $TiO_2$
6,00 Gew.% NiO
1,50 Gew.% $Al_2O_3$

Die physikalischen Eigenschaften waren wie folgt:

| | |
|---|---|
| Druckfestigkeit | 1,44 kp/mm |
| Schüttgewicht | 0,975 kg/l |
| BET-Oberfläche | 157,0 $m^2/g$. |

Beispiel 2

Herstellung des $TiO_2$-Katalysators für den adiabatischen Nachreaktor

45,9 kg des gemäß Beispiel 1, Ziffer (a) erhaltenen Titandioxids wurden in einem Kneter mit 18 l Wasser 2 Stunden geknetet. Die erhaltene Paste wurde zu 4 mm Strängen verpreßt, bei 110°C getrocknet und anschließend 6 h bei 350°C calciniert. Man erhielt 39,3 kg $TiO_2$-Katalysator mit den folgenden Eigenschaften:

| | |
|---|---|
| Schüttgewicht | 1,097 kg/l |
| Druckfestigkeit | 1,40 kp/mm |
| BET-Oberfläche | 168,3 $m^2/g$ |
| Glühverlust (2 h bei 900°C) | 7,18 Gew.% |

Beispiel 3

30 $Nm^3/h$ eines Sauergases, bestehend aus 89 Vol.% $CO_2$, 11 Vol.% $H_2S$ und Spuren von $NH_3$ und HCN, wie es bei der Vergasung hochschwefelhaltiger Rückstandsöle anfällt, wurden mit 1,65 Nm³/h Sauerstoff gemischt und auf 180°C aufgeheizt. Das Gasgemisch wurde von unten in einen Röhrenreaktor eingeleitet, der aus zwei Rohren mit einem Innendurchmesser von 76 mm und einer Länge von 2500 mm bestand. In den Rohren befanden sich jeweils 9 l des gemäß Beispiel 1 erhaltenen Katalysators. Im Mantelraum um die Rohre befand sich ein Gemisch von 27% Diphenyl und 73% Diphenyloxid (®Diphyl der Firma Bayer AG) als Kühlmittel. Durch die einsetzende exotherme Reaktion wurde Diphyl verdampft, welches anschließend in einem Kühler wieder kondensiert und in den Röhrenreaktor zurückgeleitet wurde. Das Reaktionsgemisch, das den Röhrenreaktor mit einer Temperatur von 265°C verließ, wurde bis auf 130°C abgekühlt und in einen Kondensator geleitet in dem stündlich 4,40 kg Schwefel entsprechend einem Umsatz von 93,4% abgeschieden wurden. Das den Schwefelkondensator verlassende Gas hatte die folgende Zusammensetzung:

| | |
|---|---|
| $CO_2$ | 89 Vol.% |
| $H_2S$ | 0,22 Vol.% |
| $SO_2$ | 0,11 Vol.% |
| $H_2O$ | 10,67 Vol.%. |

Darüber hinaus enthielt das Gas dampfförmigen Schwefel in einer Menge von 1 g/Nm³ Gas.

Dieses Gasgemisch wurde anschließend auf eine Temperatur von 200°C aufgeheizt und einem adiabatisch betriebenen Reaktor zugeführt, in dem sich 30 l des $TiO_2$-Katalysators gemäß Beispiel 2 befanden. Durch Umsetzung von Schwefelwasserstoff mit Schwefeldioxid (2 $H_2S + SO_2 \rightarrow 3/2\ S_2 + 2H_2O$) wurde wiederum Schwefel gebildet und somit der Gesamtumsatz weiter gesteigert. Das den adiabatischen Reaktor mit einer Temperatur von 205°C verlassende Gas wurde auf 130°C abgekühlt und einem weiteren Kondensator zugeführt, in dem pro Stunde 0,186 kg Schwefel abgeschieden wurden. Das den zweiten Schwefelkondensator verlassende Gas hatte die folgende Zusammensetzung:

| | |
|---|---|
| $CO_2$ | 89,0 Vol.% |
| $SO_2$ | 0,073 Vol.% |
| $H_2S$ | 0,146 Vol.% |
| COS | <10 Vol.ppm |
| $H_2O$ | 10,781 Vol.%. |

Außerdem enthielt das Gas dampfförmigen Schwefel in einer Menge von etwa 1 g/Nm³ Gas.

Der Gesamtumsatz der Schwefelbildung im Röhrenreaktor und adiabatischen Reaktor betrug 97,37%.

Das aus dem zweiten Kondensator für die Schwefelabscheidung erhaltene Gas wurde anschließend auf 330°C aufgeheizt und mit 0,35 Nm³/h $H_2$ versetzt und danach in einen Hydrierreaktor geleitet, in dem sich 30 l Co/Mo/$Al_2O_3$-Hydrierkatalysator befanden. In dieser Hydrierstufe wurden alle Schwefelverbindungen und der dampfdruckmäßig im Gas enthaltene Schwefel in

$H_2S$ umgewandelt, so daß sich am Ausgang des Hydrierreaktors neben $CO_2$, $H_2$ und $H_2O$ nur noch Schwefelwasserstoff im Gas befanden.

Das aus dem Hydrierreaktor erhaltene Gas wurde bis auf 35°C abgekühlt, wobei der größte Teil des im Gas enthaltenen Wassers auskondensierte. Anschließend wurde das Gas mit 0,1 Nm³/h Sauerstoff und 0,06 Nm³/h Ammoniak versetzt, auf 40°C aufgeheizt und in ein Aktivkohlebett eingeleitet. In dem Aktivkohlereaktor befanden sich 75 l Aktivkohle mit einer inneren Oberfläche von mehr als 1000 m²/g.

Im Aktivkohlebett wurde der Schwefelwasserstoff selektiv zum Schwefel oxidiert und auf der Aktivkohle abgelagert. Am Ausgang aus dem Reaktor betrug der Schwefelwasserstoffgehalt weniger als 0,1 mg/Nm³ und die COS-Konzentration weniger als 10 mg/Nm³. Dies entsprach einem Schwefelumsatz von mehr als 99,99%.

Nachdem die Aktivkohle die etwa ihrem Eigengewicht entsprechende Schwefelmenge aufgenommen hatte, wurde sie zur Regenierung mit Ammonsulfidlösung behandelt, wodurch der Schwefel extrahiert wurde.

## Patentansprüche

1. Verfahren zur Entschwefelung von $H_2S$-haltigen Gasen durch direkte katalytische Oxidation des $H_2S$ zu elementarem Schwefel mit Sauerstoff enthaltenden Gasen bei erhöhter Temperatur, dadurch gekennzeichnet, daß als Katalysator ein Titandioxid-Trägerkatalysator mit einem Gehalt von 0,1 bis 25 Gew.% Nickeloxid und 0 bis 10 Gew.% Aluminiumoxid, bezogen auf den Trägerkatalysator, verwendet wird.

2. Verfahren nach Anspruch 1, dadurch gekennzeichnet, daß als Titandioxid-Trägermaterial Anatas mit einer BET-Oberfläche von mindestens 50 m²/g verwendet wird.

3. Verfahren nach Anspruch 1 und 2, dadurch gekennzeichnet, daß ein die calcinierte Verbindung von $Ni_6Al_2(OH)_{16}CO_3 \cdot 4H_2O$ enthaltender Katalysator verwendet wird.

4. Verfahren nach Anspruch 1 bis 3, dadurch gekennzeichnet, daß die Entschwefelung in einem Röhrenreaktor unter indirekter Wärmeabführung der Reaktionswärme mit einem Kühlmittel durchgeführt wird, wobei sich der Katalysator in den Rohren des Röhrenreaktors befindet und die Rohre des Röhrenreaktors über den ganzen Querschnitt der Rohre ausfüllt, für das den Röhrenreaktor verlassende gasförmige Reaktionsgemisch Austrittstemperaturen von 180 bis 400°C aufrechterhalten werden und in einer dem Röhrenreaktor nachgeschalteten Kondensationsstufe der im Röhrenreaktor gebildete Schwefel aus dem aus dem Röhrenreaktor erhaltenen Reaktionsgemisch abgetrennt wird.

5. Verfahren nach Anspruch 4, dadurch gekennzeichnet, daß die Reaktionswärme durch Siedekühlung mit einem organischen Wärmeträgeröl als Kühlmittel abgeführt wird.

6. Verfahren nach Anspruch 4 und 5, dadurch gekennzeichnet, daß das aus dem Röhrenreaktor erhaltene Reaktionsgemisch nach Abtrennen des gebildeten Schwefels in der dem Röhrenreaktor nachgeschalteten Kondensationsstufe zur weiteren Entschwefelung in einem adiabatisch betriebenen Reaktor an einem Titandioxid enthaltenden Katalysator umgesetzt wird, wobei für das den adiabatischen Reaktor verlassende gasförmige Reaktionsgemisch Austrittstemperaturen von 150 bis 350°C aufrechterhalten werden.

7. Verfahren nach Anspruch 6, dadurch gekennzeichnet, daß im adiabatischen Reaktor Titandioxid als Katalysator verwendet wird.

8. Verfahren nach Anspruch 7, dadurch gekennzeichnet, daß als Titandioxid Anatas mit einer BET-Oberfläche von mindestens 50 m²/g verwendet wird.

9. Verfahren nach Anspruch 6 bis 8, dadurch gekennzeichnet, daß man das aus einer dem adiabatischen Reaktor zur Abscheidung des gebildeten Schwefels nachgeschalteten Kondensationsstufe erhaltene Gas nach Zugabe von Wasserstoff bei erhöhter Temperatur an einem Nickel und/oder Kobalt und Molybdän enthaltenden Katalysator zur Überführung von noch in dem Gas enthaltenen Schwefelverbindungen und enthaltenem elementarem Schwefel in Schwefelwasserstoff katalytisch hydriert und den gebildeten Schwefelwasserstoff aus dem aus der Hydrierung erhaltenen Gasstrom durch Behandlung mit einem Lösungsmittel auswäscht, den Schwefelwasserstoff durch Regenerierung des beladenen Lösungsmittels abtrennt und zur katalytischen Oxidation zurückführt.

10. Verfahren nach Anspruch 6 bis 8, dadurch gekennzeichnet, daß man das aus einer dem adiabatischen Reaktor zur Abscheidung des gebildeten Schwefels nachgeschalteten Kondensationsstufe erhaltene Gas nach Zugabe von Wasserstoff bei erhöhter Temperatur an einem Nickel und/oder Kobalt und Molybdän enthaltenden Katalysator zur Überführung von noch in dem Gas enthaltenen Schwefelverbindungen und enthaltenem elementarem Schwefel in Schwefelwasserstoff katalytisch hydriert und zur Abtrennung des Schwefelwasserstoffs das aus der Hydrierung erhaltene Gas mit einem Sauerstoff enthaltenen Gas und Ammoniak versetzt und danach über Aktivkohle leitet und dabei den Schwefelwasserstoff zu elementarem Schwefel oxidiert, der auf der Aktivkohle absorbiert wird.

11. Verfahren zur Herstellung von Katalysatoren zur Entschwefelung von H₂S-haltigen Gasen, dadurch gekennzeichnet, daß man eine Mischung von Titandioxid mit einer BET-Oberfläche von mindestens 50 m²/g und der calcinierten Verbindung von $Ni_6Al_2(OH)_{16}CO_3.4H_2O$ verformt und nach der Verformung einer Calcination unterwirft.

**Revendications**

1. Procédé de désulfuration de gaz contenant de l'H₂S par oxydation catalytique directe de l'H₂S en soufre élémentaire, à température élevée, à l'aide de gaz contenant de l'oxygène, caractérisé en ce que l'on utilise, à titre de catalyseur, un catalyseur à base d'oxyde de titane sur support avec une teneur en oxyde de nickel de 0,1 à 25% en poids et en oxyde d'aluminium de 0 à 10% en poids, par rapport au catalyseur sur support.

2. Procédé suivant la revendication 1, caractérisé en ce qu'à titre de matière de support du bioxyde de titane, on utilise de l'anatase avec une surface spécifique BET d'au moins 50 m²/g.

3. Procédé suivant les revendications 1 et 2, caractérisé en ce qu'on utilise un catalyseur contenant le composé calciné de $Ni_6Al_2(OH)_{16}CO_3.4H_2O$.

4. Procédé suivant les revendications 1 à 3, caractérisé en ce que l'on entreprend la désulfuration dans un réacteur tubulaire, sous évacuation indirecte de la chaleur de réaction à l'aide d'un agent de refroidissement, où le catalyseur est logé dans les tubes du réacteur tubulaire et remplit les tubes du réacteur tubulaire sur toute la section transversale des tubes, et, pour ce faire, le mélange de réaction gazeux qui quitte le réacteur tubulaire est maintenu à des températures de sortie qui fluctuent de 180 à 400°C et on sépare le soufre formé dans le réacteur tubulaire du mélange de réaction provenant du réacteur tubulaire dans un étage de condensation raccordé en aval du réacteur tubulaire.

5. Procédé suivant la revendication 4, caractérisé en ce que l'on évacue la chaleur de réaction par refroidissement à reflux à l'aide d'une huile caloriporteuse servant d'agent de refroidissement.

6. Procédé suivant les revendications 4 et 5, caractérisé en ce que l'on fait réagir le mélange de réaction provenant du réacteur tubulaire, après la séparation du soufre formé, dans l'étage de condensation monté en aval du réacteur tubulaire, à une désulfuration complémentaire dans un réacteur travaillant de manière adiabatique, sur un catalyseur contenant du bioxyde de titane, où, pour ce faire, on maintient le mélange de réaction qui quitte le réacteur adiabatique, à des températures de sortie qui fluctuent de 150 à 350°C.

7. Procédé suivant la revendication 6, caractérisé en ce que l'on utilise du boixyde de titane dans le réacteur adiabatique.

8. Procédé suivant la revendication 7, caractérisé en ce qu'à titre de bioxyde de titane, on utilise de l'anatase avec une surface spécifique BET d'au moins 50 m²/g.

9. Procédé suivant les revendications 6 à 8, caractérisé en ce que l'on hydrogène catalytiquement le gaz provenant de l'étage de condensation raccordé en aval du réacteur adiabatique en vue de la séparation du soufre formé, après addition d'hydrogène, à température élevée, sur un catalyseur contenant du nickel et/ou du cobalt et du molybdène, en vue de la conversion du soufre élémentaire et des composés du soufre encore contenus dans le gaz en acide sulfhydrique et on lixivie l'acide sulfhydrique formé du courant de gaz provenant de l'hydrogénation par traitement à l'aide d'un solvant, on sépare l'acide sulfhydrique par régénération du solvant chargé et on le renvoie à l'oxydation catalytique.

10. Procédé suivant les revendications 6 à 8, caractérisé en ce que l'on hydrogène catalytiquement le gaz provenant de l'étage de condensation raccordé en aval du réacteur adiabatique en vue de la séparation du soufre formé, après addition d'hydrogène, à température élevée, sur un catalyseur contenant du nickel et/ou du cobalt et du molybdène, en vue de la conversion du soufre élémentaire et des composés du soufre encore contenus dans le gaz en acide sulfhydrique et, en vue de la séparation de l'acide sulfhydrique, on mélange le gaz provenant de l'hydrogénation à de l'ammoniac et un gaz contenant de l'oxygène et on fait ensuite passer le mélange sur du charbon actif, de manière à ainsi oxyder l'acide sulfhydrique en soufre élémentaire qui est absorbé par le charbon actif.

11. Procédé de fabrication de catalyseurs pour la désulfuration de gaz contenant de l'H$_2$S, caractérisé en ce que l'on façonne un mélange de bioxyde de titane possédant une surface spécifique BET d'au moins 50 m$^2$/g et du composé calciné de Ni$_6$Al$_2$(OH)$_{16}$CO$_3$.4H$_2$O et on le soumet à une calcination après le façonnage.

**Claims**

1. A process for the desulfurization of an H$_2$S-containing gas by direct catalytic oxidation of the H$_2$S to elemental sulfur with an oxygen-containing gas at elevated temperatures, wherein the catalyst used is a supported titanium dioxide catalyst containing from 0.1 to 25% by weight of nickel oxide and from 0 to 10% by weight of aluminum oxide, the percentages being based on the supported catalyst.

2. A process as claimed in claim 1, wherein the titanium dioxide carrier material used is anatase having a BET specific surface area of not less than 50 m$^2$/g.

3. A process as claimed in either of claims 1 and 2, wherein a catalyst containing the calcined compound of Ni$_6$Al$_2$(OH)$_{16}$CO$_3$.4H$_2$O is used.

4. A process as calimed in any of claims 1 to 3, wherein the desulfurization is carried out in a tube reactor with indirect removal of the heat of reaction by means of a coolant, and the catalyst is present in the tubes of the tube reactor and completely fills these tubes over their entire cross-section, the temperature of the gaseous reaction mixture leaving the tube reactor is maintained at from 180 to 400°C, and the sulfur formed in the tube reactor is separated off from the reaction mixture obtained from this reactor, this step being carried out in a condensation stage downstream from the tube reactor.

5. A process as claimed in claim 4, wherein the heat of reaction is removed by evaporative cooling, using an organic heat-transfer oil as the coolant.

6. A process as claimed in either of claims 4 and 5, wherein the reaction mixture obtained from the tube reactor is freed from the sulfur formed, this step being carried out in the condensation stage downstream from the tube reactor, and is then converted in an adiabatically operated reactor over a catalyst containing titanium dioxide in order to effect further desulfurization, the temperature of the gaseous reaction mixture leaving the adiabatic reactor being maintained at from 150 to 350°C.

7. A process as claimed in claim 6, wherein titanium dioxide is used as the catalyst in the adiabatic reactor.

8. A process as claimed in claim 7, wherein the titanium dioxide used is anatase having a BET specific surface area of not less than 50 m$^2$/g.

9. A process as claimed in any of claims 6 to 8, wherein the gas obtained from a condensation stage for separating off the sulfur formed and located downstream from the adiabatic reactor is mixed with hydrogen and, in order to convert sulfur compounds still present in the gas, and elemental sulfur present, to hydrogen sulfide, is then catalytically hydrogenated at elevated temperatures over a catalyst containing nickel or cobalt and molybdenum, and the resulting hydrogen sulfide is washed out of the gas stream obtained from the hydrogenation, by treatment with a solvent, and is separated off by regenerating the laden solvent and recycled to the catalytic oxidation.

10. A process as claimed in any of claims 6 to 8, wherein the gas obtained from a condensation stage for separating off the sulfur formed and located downstream form the adiabatic reactor is mixed with hydrogen and, in order to convert sulfur compounds still present in the gas, and elemental sulfur present, to hydrogen sulfide, is then catalytically hydrogenated at elevated temperatures over a catalyst containing nickel or cobalt and molybdenum, and, in order to separate off the hydrogen sulfide, an oxygen-containing gas and ammonia are added to the gas obtained from the hydrogenation, and the resulting mixture is then passed over active carbon, the hydrogen sufide being oxidized to elemental sulfur, which is absorbed on the active carbon.

11. A process for the preparation of a catalyst for the desulfurization of an H$_2$S-containing gas, wherein a mixture of titanium dioxide having a BET specific surface area of not less than 50 m$^2$/g and the calcined compound of Ni$_6$Al$_2$(OH)$_{16}$CO$_3$.4H$_2$O is molded and the moldings are then calcined.